(19) Europäisches Patentamt
European Patent Office
Office européen des brevets

(11) **EP 2 774 753 B1**

(12) **EUROPEAN PATENT SPECIFICATION**

(45) Date of publication and mention
of the grant of the patent:
**20.12.2017 Bulletin 2017/51**

(21) Application number: **12845862.7**

(22) Date of filing: **30.10.2012**

(51) Int Cl.:
**B32B 3/12** *(2006.01)*        **B32B 27/12** *(2006.01)*
**B32B 5/02** *(2006.01)*        **B32B 27/08** *(2006.01)*

(86) International application number:
**PCT/JP2012/078059**

(87) International publication number:
**WO 2013/065692 (10.05.2013 Gazette 2013/19)**

(54) **MULTILAYER STRUCTURE**

MEHRSCHICHTIGE STRUKTUR

STRUCTURE MULTICOUCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2011 JP 2011239436
10.04.2012 JP 2012089172**

(43) Date of publication of application:
**10.09.2014 Bulletin 2014/37**

(73) Proprietors:
• **Kurashiki Boseki Kabushiki Kaisha
Kurashiki-shi, Okayama 710-0054 (JP)**
• **Gifu Plastic Industry Co., Ltd.
Gifu
500-8721 (JP)**

(72) Inventors:
• **KUSU Kazuya
Osaka-shi,
Osaka 541-8581 (JP)**
• **KANDA Takashi
Osaka-shi,
Osaka 541-8581 (JP)**
• **SHIBAGAKI Shingo
Gifu 500-8721 (JP)**
• **AOKI Norihiro
Gifu 500-8721 (JP)**

(74) Representative: **Hall, Matthew Benjamin
Dehns
St Bride's House
10 Salisbury Square
London EC4Y 8JD (GB)**

(56) References cited:
**EP-A2- 2 006 464        JP-A- 2005 041 130
JP-A- 2009 000 933        JP-A- 2009 532 231
JP-U- H0 712 231**

**Description**

Technical Field

The present invention relates to a multilayer structure in which a fiber sheet and a thermoplastic resin film are laminated on at least one principal surface of a hollow plate-like body.

Background Art

A hollow plate-like body is also called, e.g., a honeycomb core, a corrugated core, or a hollow columnar core. The hollow plate-like body is characterized by light weight and high strength, and therefore has been used widely from consumer products such as containers, shelves, pallets, panels, and bags to industrial products for aircraft or the like. Patent Document 1 proposes a sandwich structure in which the hollow portions of a honeycomb core material are filled with a synthetic resin foam material, and an outer covering plate is bonded to both sides of the honeycomb core material. Patent Document 2 proposes a structure in which a fiber reinforced plastic (FRP) is bonded to both sides of a honeycomb core material. Patent Document 3 proposes a structure in which a fabric composite material layer made of a woven or nonwoven fabric and a prepreg of a unidirectional fiber reinforced resin are bonded in this order to both sides of a honeycomb core material. Patent Document 4 proposes a structure in which a middle material and a decorative film are formed integrally on both sides of a honeycomb core material, the middle material including two types of unidirectional fiber bodies that are disposed separately in different directions. Patent Document 5 proposes a production method in which a single sheet is vacuum formed and folded into a honeycomb core material.

In the above conventional proposals, however, it is difficult to satisfy both flexural rigidity and flexural strength while maintaining the light weight.

Patent Document 6 discloses a sandwich panel comprising a laminating material, which comprises a plurality of laminated fiber bodies. The laminating material comprises at least four unidirectional fiber bodies which are stitched together and then impregnated with resin.

Patent Document 7 discloses joining a lightweight thermoplastic resin sheet and a glass fiber cloth with an adhesive such as epoxy resin.

Patent Document 8 discloses a sheet that is placed under the body, such as a mat. In the sheet, a plane film and a projection film are laminated, and fiber sheets are formed on both surfaces of the laminate and integrated together. Spaces of the projection film are filled with resin beads such as expanded polystyrene.

Patent Document 9 discloses a ballistic panel in which an aerospace-specification grade honeycomb is positioned between panels comprising non-woven ballistic resistant fibrous layers, and optionally one or more fire resistant layers.

Prior Art Documents

Patent Documents

Patent Document 1: JP S61(1986)-30844 U
Patent Document 2: JP H8(1996)-258189 A
Patent Document 3: Japanese Patent No. 2627851
Patent Document 4: Japanese Patent No. 4278678
Patent Document 5: Japanese Patent No. 4408331
Patent Document 6: EP 2006464 A
Patent Document 7: JP 2005-041130 A
Patent Document 8: JP H07-12231 U
Patent Document 9: JP 2009-532231 A

Disclosure of Invention

Problem to be Solved by the Invention

To solve the above problems, the present invention provides a multilayer structure that can be light weight and satisfy both flexural rigidity and flexural strength.

Means for Solving Problem

A multilayer structure of the present invention includes a hollow plate-like body made of a thermoplastic resin, and a fiber sheet and a thermoplastic resin film that are laminated on at least one principal surface of the hollow plate-like body. The multilayer structure is characterised in that it is formed by thermally laminating the layers, with an adhesive film that has a lower melting point than the thermoplastic resin film being interposed therebetween.

Effects of the Invention

According to the present invention, the multilayer structure includes the hollow plate-like body made of a thermoplastic resin, and the fiber sheet and the thermoplastic resin film that are laminated on at least one principal surface of the hollow plate-like body, and thus can be light weight and satisfy both flexural rigidity and flexural strength. In other words, even if the multilayer structure of the present invention is curved, raised wrinkles are not formed or not likely to be formed on the inner surface due to buckling or bending, so that the strength is not likely to be reduced. Thus, the multilayer structure can satisfy both flexural rigidity and flexural strength (buckling strength) while maintaining the light weight.

Brief Description of Drawings

[FIG. 1] FIG. 1A is a cross-sectional view of a multilayer structure of an aspect of the present invention when the multilayer structure is curved. FIG. 1B is a cross-sectional view of a multilayer structure of another aspect of the present invention when the multilayer structure is curved.
[FIG. 2] FIGS. 2A to 2E are cross-sectional views of multilayer structures of an aspect of the present invention.
[FIG. 3] FIG. 3 is a perspective view of a multiaxial fiber sheet of an aspect of the present invention.
[FIG. 4] FIG. 4 is a perspective view showing a process of manufacturing a multiaxial fiber sheet of an aspect of the present invention.
[FIG. 5] FIG. 5 is a cross-sectional view of a multilayer structure of a comparative example when the multilayer structure is curved.

Description of the Invention

It is important that a multilayer structure used for containers, shelves, pallets, panels, bags, etc. has rigidity and strength against bending. At first, the present inventors hypothesized that the flexural rigidity and the flexural strength of the multilayer structure could be improved by laminating a fiber sheet on a surface layer of a hollow plate-like body, and actually laminated the fiber sheet on the surface layer of the hollow plate-like body. However, contrary to the hypothesis, it was difficult to improve the flexural rigidity and the flexural strength only by laminating the fiber sheet. The present inventors investigated the cause of this and found that when the hollow plate-like body with a thickness of about 3 to 30 mm was curved, raised wrinkles were likely to be formed on the inwardly curved surface due to buckling or bending, and these raised wrinkles disturbed the constituent fibers of the fiber sheet, thereby reducing the flexural rigidity and the flexural strength.

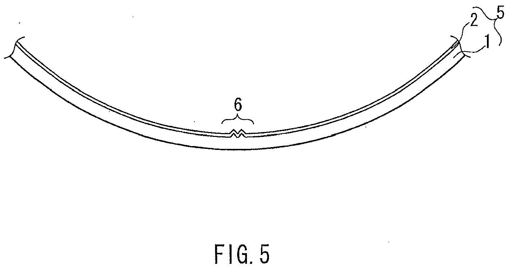

This will be described with reference to the drawings. In the following description of the drawings, the same components are denoted by the same reference numerals. As shown in FIG. 5, when a multilayer structure 5, in which a fiber sheet 2 is laminated on the surface of a hollow plate-like body 1, is curved, raised wrinkles 6 are likely to be formed on the inner surface due to buckling or bending, and these raised wrinkles 6 disturb the constituent fibers of the fiber sheet 2, thereby reducing the flexural rigidity and the flexural strength.

In order to prevent the formation of raised wrinkles due to buckling, a fiber sheet and a thermoplastic resin film are combined and laminated on the surface of the hollow plate-like body. With this configuration, even if the multilayer structure is curved while maintaining a light weight, raised wrinkles are not likely to be formed on the inner surface due to buckling or bending. The order in which the fiber sheet and the thermoplastic resin film are layered may be reversed in terms of the flexural rigidity and the flexural strength. However, in view of the surface smoothness, it is preferable that the thermoplastic resin film is located outside.

The fiber sheet and the thermoplastic resin film of the present invention are laminated on at least one principal surface of the hollow plate-like body. If the fiber sheet and the thermoplastic resin film are laminated on one of the principal surfaces, they should be disposed inside when the multilayer structure is curved, since raised wrinkles are likely to occur on the inner surface of the curved multilayer structure, as described above. In this case, either the fiber sheet or the thermoplastic resin film or both of them may be laminated on the other principal surface. When stresses are applied in various directions to the multilayer structure in use, it is preferable that the fiber sheet and the thermoplastic resin film are laminated on both principal surfaces of the hollow plate-like body. The fiber sheet and the thermoplastic resin film are bonded to the hollow plate-like body using heat or an adhesive. Therefore, by laminating the fiber sheet and the thermoplastic resin film on both principal surfaces, these principal surfaces can be symmetrical and suppress a defect such as warpage in a product. As a result, a flat product can be provided. In the above description, the principal surfaces are planar upper and lower surfaces.

Any method for laminating the hollow plate-like body with the fiber sheet and the thermoplastic resin film may be used. Examples of the method include the following:

(1) a method in which the fiber sheet is laminated on the hollow plate-like body, on which the thermoplastic resin film further is laminated and integrated;
(2) a method in which the thermoplastic resin film is laminated on the hollow plate-like body, on which the fiber sheet further is laminated and integrated; and
(3) a method in which the fiber sheet and the thermoplastic resin film are combined into a composite sheet beforehand, and the composite sheet and the hollow plate-like body are laminated and integrated.

An adhesive film may be provided between the fiber sheet and the thermoplastic resin film or between the thermoplastic resin film and the hollow plate-like body. Moreover, an adhesive film also may be provided between the fiber sheet and the hollow plate-like body. The adhesive film may be provided either between each of the layers or between any of the layers. Examples of the configuration include the following: hollow plate-like body / adhesive film / fiber sheet / adhesive film / thermoplastic resin film; hollow plate-like body / adhesive film / fiber sheet / thermoplastic resin film; and hollow plate-like body / adhesive film / thermoplastic resin film / adhesive film / fiber sheet / adhesive film / thermoplastic resin film.

The above lamination method can be performed appropriately, e.g., by directly fusing or indirectly heating the layers by the application of heat and pressure, by thermally laminating the layers with an adhesive film such as a low melting point film interposed between them, or by bonding the layers together with an adhesive. Alternatively, the fiber sheet and the thermoplastic resin film may be laminated at the same time as the production of the hollow plate-like body. In view of ease of handling during the production, it is preferable that the fiber sheet and the thermoplastic resin film are combined into a composite sheet beforehand. The lamination method for producing the composite sheet may be either direct heating or indirect heating.

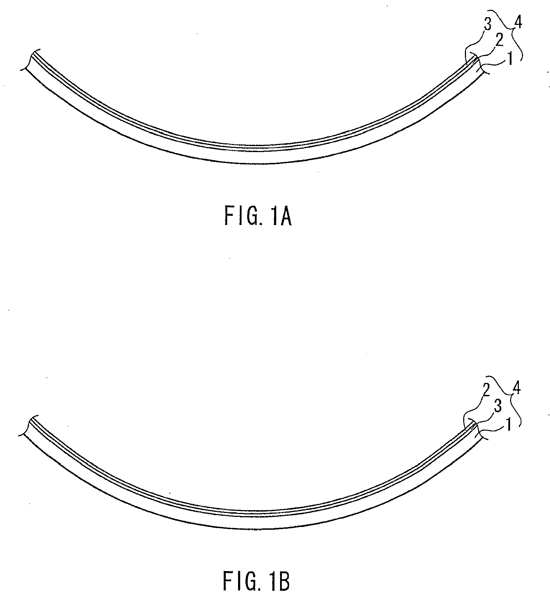

FIG. 1A is a cross-sectional view of a multilayer structure of an aspect of the present invention when the multilayer structure is curved. A multilayer structure 4 is configured so that a fiber sheet 2 and a thermoplastic resin film 3 are laminated in this order on the surface of a hollow plate-like body 1. Even if this multilayer structure 4 is curved, raised wrinkles are not formed or not likely to be formed on the inner surface due to buckling or bending. FIG. 1B is a cross-sectional view of a multilayer structure 4 of another aspect of the present invention when the multilayer structure is curved. FIG. 1B differs from FIG. 1A in that the thermoplastic resin film 3 and the fiber sheet 2 are laminated in this order on the surface of the hollow plate-like body 1. The reason that raised wrinkles are not formed or not likely to be formed due to buckling or bending even if the multilayer structure 4 is curved inward is as follows. The fiber sheet can resist tensile forces but is susceptible to compressive forces, and therefore is likely to cause buckling on the inner side when it is curved. However, the thermoplastic resin film has the tensile strength that is equal to the compressive strength, and therefore can suppress a reduction in the strength of the fiber sheet and improve the buckling strength. Consequently, since the fiber arrangement is not disturbed, the strength of the fiber sheet is not reduced. Thus, the multilayer structure 4 can satisfy both the flexural rigidity and the flexural strength while maintaining a light weight as a whole. In addition to the fiber sheet and the thermoplastic resin film, an adhesive sheet, a protective sheet (decorative sheet), etc. may be layered as needed.

The adhesive film may be, e.g., a PE (polyethylene) film, a PP (polypropylene) film, a film made of a mixture of PE and PP, or a film including a plurality of layers. Moreover, the adhesive film may use other materials such as an ethylene vinyl acetate copolymer (EVA) and an olefin-based film.

The melting point of the adhesive film is preferably 5 to 40°C lower than that of the thermoplastic resin film. The thickness of the adhesive film is preferably 5 to 200 $\mu$m. The weight per unit area of the adhesive film is preferably 10 to 200 $g/m^2$.

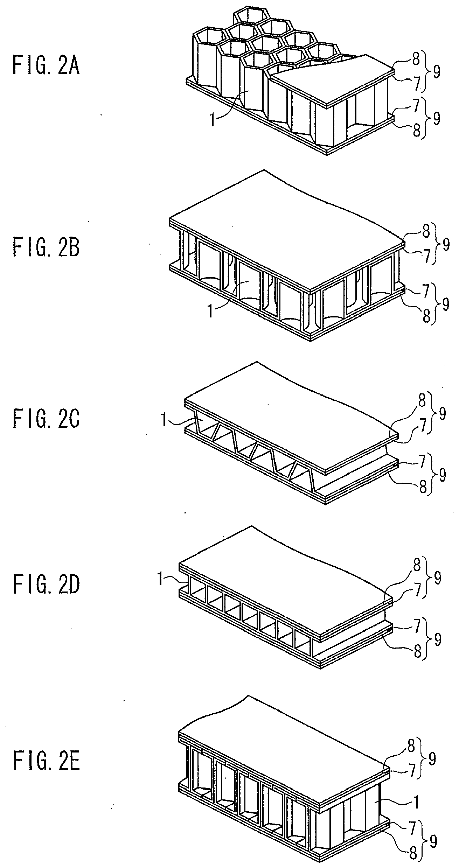

The hollow plate-like body of the present invention means a core layer with an uneven shape. For example, the hollow plate-like body is a rigid body such as a honeycomb core, a corrugated core, or a hollow columnar core and may have any shape. The present invention also can use all the hollow plate-like bodies as disclosed in Patent Documents 1 to 5. FIGS. 2A to 2E show examples of the hollow plate-like body. FIG. 2A is an example of the honeycomb core, FIG. 2B is an example of the corrugated core with concavities and convexities formed by embossing, FIG. 2C is an example of the corrugated core with alternate ridges and grooves formed by embossing, FIG. 2D is an example of the hollow columnar core, and FIG. 2E is an example of the honeycomb core formed from a film. Another example of the honeycomb core can be a hollow plate-like body formed by joining circular cones so as to face each other. In the examples of FIGS. 2A to 2E, a fiber sheet 7 and a thermoplastic resin film 8 are combined into a composite sheet 9 beforehand, and the composite sheet 9 is laminated on both sides of a hollow plate-like body 1. Other examples also include a structure in which a resin film is bonded to or integrally formed with the uneven core layer to provide a flat surface.

The hollow plate-like body may be made of any material as long as it is a thermoplastic resin. Examples of the material include the following: polypropylene (PP); polyethylene (PE); polystyrene (PS); acrylonitrile-styrene resin (AS); acrylonitrile-butadiene-styrene resin (ABS); polyvinyl chloride (PVC); methacrylate resin (PMMA); polyethylene terephthalate (PET); polybutylene terephthalate (PBT); polyvinylidene chloride (PVDC); ethylene vinyl alcohol copolymer (E/VAL); ionomer (i.e., a resin obtained by allowing a polyvalent metal ion to act on a copolymer of ethylene and acrylic acid or methacrylic acid); polyamide (PA); polyacetal (POM); and polycarbonate (PC). Among these materials, polypropylene is preferred in view of the cost and the light weight properties. For example, the hollow plate-like body has a thickness of 3 to 30 mm.

The fiber sheet used in the present invention is preferably at least one fiber sheet selected from a multiaxial fiber sheet, a woven fabric, a knitted fabric, and a nonwoven fabric. Examples of the woven fabric include a plain woven fabric, a twill fabric, a satin fabric, a net woven fabric, and a triaxial woven fabric. Examples of the knitted fabric include a plain knitted fabric, a rib knitted fabric, a tricot fabric, a raschel fabric, and a Moquette fabric. Examples of the nonwoven fabric include a spun bond nonwoven fabric, a thermal bond nonwoven fabric, and a needle punched nonwoven fabric. Moreover, lace, braid, net, or the like also can be used as the fiber sheet. When any of these fiber sheets is laminated with the thermoplastic resin film, the laminate is not likely to cause raised wrinkles or depressions due to buckling even if it is curved, and therefore can improve the flexural strength (buckling strength). In particular, the multiaxial fiber sheet and/or the woven fabric are preferred because they are thin and can have high strength as well as high surface smoothness.

The fiber material for the fiber sheet can be selected as desired from thermoplastic fibers such as a polypropylene (PP) fiber, a polyethylene terephthalate (PET) fiber, and a nylon fiber, natural fibers such as cotton and hemp, glass fibers, and carbon fibers. Moreover, core-sheath fibers including a core material (inner layer) and a sheath material (outer layer) with a lower melting point than the core material also can be used. A weathering agent, an antistatic agent, and other effective materials may be added to the fiber material.

The weight per unit area of the fiber sheet is preferably 100 to 800 $g/m^2$, and more preferably 200 to 700 $g/m^2$ in terms of the balance between the light weight properties and the reinforcing properties. It is preferable that fiber sheets having a weight per unit area of 100 $g/m^2$ are arranged in layers. This makes it easier to set the target weight of the multilayer structure.

For example, when the fiber sheet is a woven fabric and the hollow plate-like body has a honeycomb shape, the fiber sheet and the hollow plate-like body may be arranged so that the angle of the side of a honeycomb cell is the same as the warp or weft direction of the woven fabric. Alternatively, the fiber sheet and the hollow plate-like body may be arranged so that one pair of sides of the honeycomb cell is the same as the warp or weft direction of the woven fabric, or two or more pairs of sides of the honeycomb cell are the same as the warp or weft direction of the woven fabric. Moreover, when the warp or weft direction of the woven fabric of the fiber sheet is at right angles to the parallel sides of the honeycomb cell, the flexural rigidity or the flexural strength can be improved. Further, when the hollow plate-like body has directions in which the flexural rigidity and the flexural strength are increased or reduced, directional properties may be imparted to the fiber sheet so as to compensate particularly for the direction in which the flexural rigidity and the flexural strength of the hollow plate-like body are weak. In another method, the fiber sheet and the hollow plate-like body may be arranged so that arrays of the ribs (see, e.g., FIGS. 2C and 2D) or the convexities (see, e.g., FIG. 2B) of the hollow plate-like body are parallel to the warp or weft of the woven fabric of the fiber sheet. In yet another method, the fiber sheet and the hollow plate-like body may be arranged so that arrays of the ribs (see, e.g., FIGS. 2C and 2D) or the convexities (see, e.g., FIG. 2B) of the hollow plate-like body are perpendicular or diagonal to the warp or weft of the woven fabric of the fiber sheet.

The multiaxial fiber sheet is obtained by laminating a plurality of layers, in each of which thermoplastic fibers are arranged in one direction, so that the fiber direction differs from layer to layer, and integrating the plurality of layers together. All the layers can be integrated, e.g., by stitching them with stitch threads, fusing the constituent fibers, bonding the low melting point fibers, or bonding them with an adhesive. For ease of handling, it is preferable that the layers are stitched with thermoplastic stitch threads. The unidirectional fiber layers can have high strength in various directions, since the fibers are oriented in many directions such as longitudinal, transverse, and diagonal directions for each of the layers, and there is no crossing of the fibers in contrast to the woven fabric and the knitted fabric. The thermoplastic fibers may be any fiber such as a polypropylene (PP) fiber and a polyethylene terephthalate (PET) fiber. The configuration for improving the peel strength of the multiaxial fiber sheet, the thermoplastic resin film, and the hollow plate-like body is preferably as follows: hollow plate-like body / adhesive film / multiaxial fiber sheet / adhesive film / thermoplastic resin film. The weight per unit area of the multiaxial fiber sheet is preferably 100 to 800 $g/m^2$. For example, when the weight per unit area is 250 to 260 $g/m^2$, it is possible to provide a fiber sheet having no gap between the fibers. The multiaxial fiber sheets with different weights per unit area may be bonded to the upper and lower surfaces of the hollow plate-like body, respectively.

When the hollow plate-like body has a honeycomb shape, the multiaxial fiber sheet and the hollow plate-like body may be arranged so that any of the following relationships is established between the angles of the sides of a honeycomb cell and the angles of the directions of the unidirectional layers in the multiaxial fiber sheet. For example, the angle of one pair of sides of the honeycomb cell may be the same as that of the direction of one of the unidirectional layers, or the angles of two pairs of sides of the honeycomb cell may be the same as those of the directions of two of the unidirectional layers, or the angles of three pairs of sides of the honeycomb cell may be the same as those of the directions of three of the unidirectional layers. Moreover, when the direction of one of the unidirectional layers in the multiaxial fiber sheet is at right angles to the parallel sides of the honeycomb cell, the flexural rigidity or the flexural strength can be improved. In such a case, the angles of the directions of other unidirectional layers may be at ± 30°, which are the same as the angles of the other sides of the honeycomb cell. Further, when the hollow plate-like body has directions in which the flexural rigidity and the flexural strength are increased or reduced, directional properties may be imparted to the multiaxial fiber sheet so as to compensate particularly for the direction in which the flexural rigidity and the flexural strength of the hollow plate-like body are weak. In another method, the multiaxial fiber sheet and the hollow plate-like body may be arranged so that arrays of the ribs (see, e.g., FIGS. 2C and 2D) or the convexities (see, e.g., FIG. 2B) of the hollow plate-like body are the same as the angles of the directions of the unidirectional layers in the multiaxial fiber sheet. In yet another method, the multiaxial fiber sheet and the hollow plate-like body may be arranged so that arrays of the ribs (see, e.g., FIGS. 2C and 2D) or the convexities (see, e.g., FIG. 2B) of the hollow plate-like body are substantially perpendicular to the angles of the directions of the unidirectional layers in the multiaxial fiber sheet.

The fiber sheet may be a laminate of the multiaxial fiber sheet and at least one fiber sheet selected from a woven fabric, a knitted fabric, and a nonwoven fabric. Since each of the layers in the multiaxial fiber sheet is arranged in one direction, when an attempt is made to reduce the weight of the multiaxial fiber sheet, a gap can be formed between the fibers, which may result in a non-uniform appearance. Therefore, a woven fabric having the weight per unit area comparable to that of the multiaxial fiber sheet whose weight has been reduced may be bonded instead of the multiaxial fiber sheet. This can make the appearance uniform and also improve the design. For example, a method for bonding a woven fabric to the surface of a triaxial fiber sheet at angles of 90°/30°/-30°, a method for bonding a woven fabric having the weight per unit area comparable to that of a fiber sheet at an angle of 90° to the surface of a biaxial fiber sheet at angles of 30°/-30° in the triaxial fiber sheet at angles of 90°/30°/-30°, or the like can be used to make the appearance uniform and improve the design. Moreover, when a multiaxial fiber sheet having the fiber direction different from the warp and weft directions of a woven fabric is used, strong directional properties can be reduced. Further, when two or more triaxial fiber sheets are layered, one of the layers (particularly the uppermost layer) can be a woven fabric.

The thermoplastic resin film may be any film such as an undrawn film, a uniaxially drawn film, or a biaxially drawn film (biaxially oriented film). Examples of the material for the thermoplastic resin film include the following: polypropylene (PP); polyethylene (PE); polystyrene (PS); acrylonitrile-styrene resin (AS); acrylonitrile-butadiene-styrene resin (ABS); polyvinyl chloride (PVC); methacrylate resin (PMMA); polyethylene terephthalate (PET); polybutylene terephthalate (PBT); polyvinylidene chloride (PVDC); ethylene vinyl alcohol copolymer (E/VAL); ionomer (i.e., a resin obtained by allowing a polyvalent metal ion to act on a copolymer of ethylene and acrylic acid or methacrylic acid); polyamide (PA); polyacetal (POM); polycarbonate (PC); and ethylene vinyl acetate copolymer (EVA). Among these materials, PP and PE are preferred in view of the cost and the light weight properties. The thickness of the thermoplastic resin film is preferably 0.1 to 0.5 mm because the thermoplastic resin film can be light weight and have high impact strength. The thermoplastic resin film also may have a thickness of 0.5 to 3.0 mm. In such a case, it is preferable that the impact strength is increased by incorporating, e.g., a soft material (elastomer). A weathering agent, an antistatic agent, and other effective materials may be added to the thermoplastic resin film.

The multilayer structure preferably is made of the same materials in terms of bonding such as welding and recyclability. In particular, the hollow plate-like body, the fiber sheet, and the thermoplastic resin film may use the same materials including, e.g., polypropylene (PP), polyethylene (PE), polystyrene (PS), acrylonitrile-styrene resin (AS), acrylonitrile-butadiene-styrene resin (ABS), polyvinyl chloride (PVC), methacrylate resin (PMMA), polyethylene terephthalate (PET), polybutylene terephthalate (PBT), polyvinylidene chloride (PVDC), ethylene vinyl alcohol copolymer (E/VAL), ionomer (i.e., a resin obtained by allowing a polyvalent metal ion to act on a copolymer of ethylene and acrylic acid or methacrylic acid), polyamide (PA), polyacetal (POM), polycarbonate (PC), and ethylene vinyl acetate copolymer (EVA). Among these materials, PP and PE are preferred in view of the cost and the light weight properties. In this multilayer structure, even if the thermoplastic resin film or the hollow plate-like body is broken into pieces under impact, the presence of the fiber sheet can prevent those pieces from being scattered. The apparent density of the multilayer structure is 0.05 to 1.0 g/cm$^3$, and preferably 0.1 to 0.5 g/cm$^3$. It is also possible to make the weight (weight per unit area) of the fiber sheet smaller than that of the thermoplastic resin film, or make the weight (weight per unit area) of the thermoplastic resin film smaller than that of the fiber sheet.

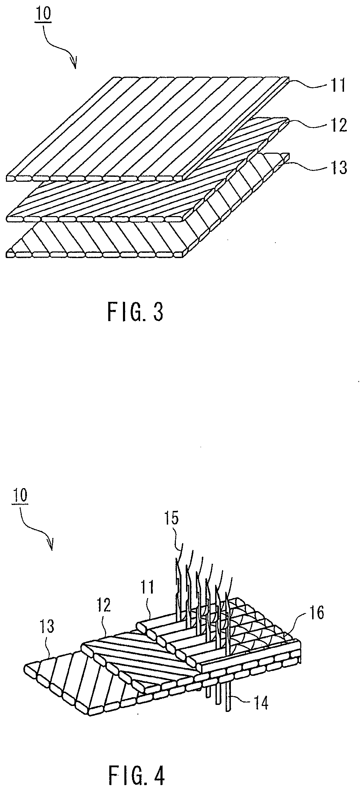

FIG. 3 is a perspective view of a multiaxial fiber sheet 10 of an aspect of the present invention. In this example, the multiaxial fiber sheet 10 includes a fiber layer 11 arranged in the longitudinal direction and fiber layers 12, 13 arranged at ± 60° with respect to the longitudinal direction, respectively. The number of the fiber layers is not limited to three, and more than three layers may be arranged in various directions. It is preferable that the multiaxial fiber sheet includes 3 to 5 unidirectional layers in view of the light weight properties, the compactness, and the cost.

FIG. 4 is a perspective view showing a process of manufacturing a multiaxial fiber sheet of an aspect of the present invention. The fiber layers 11 to 13 are stitched and integrated using knitting needles 14 and stitch threads 15. Reference numeral 16 represents stitch threads (knitting threads). By bonding the multiaxial fiber sheet or the fiber sheet, the impact strength is not likely to be reduced at a low temperature.

In the multilayer structure of the present invention, when a composite sheet obtained by combining the fiber sheet and the thermoplastic resin film is used, the fiber sheet may be interposed between the thermoplastic resin films to form a sandwich structure. This can prevent the occurrence of wrinkles on the fiber sheet.

When the fiber sheet is a laminate of a plurality of layers, and the surface layer is a PE fiber layer, it is preferable that the adhesive film also is made of PE. This can improve the adhesive properties.

In the multilayer structure of the present invention, when the individual sheets are successively bonded to the surface of a core composed of a hollow plate-like body, wrinkles are not likely to occur even without the use of the adhesive film. Moreover, the peel strength can be improved in such a manner that a thermoplastic resin film is molded by mixing a resin material that is to be located outside the resin sheet and other materials, and then this thermoplastic resin film and the fiber sheet are bonded together.

The thermoplastic resin film may be a resin layer that is produced by extrusion directly on the fiber sheet. Each of the sheets or films may be either a signal layer or multiple layers. The multiple layers may be two layers, three layers, or more than three layers. The melting points of the individual layers can be listed, e.g., in the following order: thermoplastic resin film > adhesive film ≥ fiber sheet or thermoplastic resin sheet > fiber sheet. The melting point of the hollow plate-like body is preferably the same as that of the thermoplastic resin film, and preferably the same as or higher than that of the fiber sheet.

Examples

Hereinafter, the present invention will be described in more detail by way of examples. However, the present invention is not limited to the following examples.

< Measuring method of flexural rigidity and flexural strength >

The flexural rigidity and the flexural strength were measured by a four-point bending method according to ASTM C393. The test piece had a width of 75 mm and a length of 550 mm, and the test rate was 20 mm/min. The support span and the loading span were as follows.

(1) For measuring the flexural strength, the support span was 500 mm and the loading span was 50 mm.
(2) For measuring the flexural rigidity, the support span was 500 mm and the loading span was 167 mm.

## Calculating Formula

$$\text{Flexural strength} = P(S - L) / 4$$

Flexural rigidity $= ML^2 / 8y = \{P(S - D)L^2\} / 32y$
P: load (N)
S: support span (m)
L: loading span (m)
y: deformation due to pure bending (m)

(Examples 1 to 2, Comparative Examples 1 to 2)

< Hollow plate-like body >

A core material (trade name: "TECCELL" manufactured by Gifu Plastic Industry Co., Ltd.) with a thickness of 8 mm was used (see FIG. 2E, referred to as "T8" in the following). The weight per square meter (weight per unit area) was 1100 g/m$^2$. This hollow plate-like body was produced in the following manner. A 0.3 mm thick polypropylene (PP) sheet was vacuum formed three-dimensionally and folded into a honeycomb core material. Because of concavities or holes provided in the surface of the honeycomb core material, the bonding area with the multiaxial fiber sheet is increased and the anchor effect is obtained, thereby improving the welding strength.

< Multiaxial fiber sheet >

A multiaxial fiber sheet (trade name: "KURAMAS" manufactured by KURABO INDUSTRIES LTD.) was used (see FIG. 4). The fiber direction was 90°/30°/-30°. The weight per square meter (weight per unit area) was 350 g/m$^2$ (referred to as "A350" in the following). This multiaxial fiber sheet used a large number of PP filaments with a single fiber fineness of 1850 decitex. The stitch threads were PET threads.

< Thermoplastic resin film >

A polypropylene resin undrawn sheet having a thickness shown in Table 1 and a tensile modulus of elasticity of 1600 (MPa) was used (referred to as "PP0.2mm" or the like in the following, the numerical value indicates the thickness).

< Adhesive film >

A 0.03 mm thick polyethylene film was interposed as an adhesive film between each of the hollow plate-like body, the multiaxial fiber sheet, and the thermoplastic resin film.

< Production of multilayer structure >

The multiaxial fiber sheet and the thermoplastic resin film were disposed on both sides of the hollow plate-like body with the polyethylene film interposed between each of them, and the adhesive films were welded by a thermal lamination method so that all the layers were integrated together.

Table 1 shows the specific rigidity and the specific strength derived from the flexural rigidity and the flexural strength of the multilayer structure thus produced. In Table 1, TD represents the width direction and MD represents the longitudinal direction. The specific rigidity is a value obtained by dividing a flexural rigidity value by specific gravity. The specific strength is a value obtained by dividing a flexural strength value by specific gravity. The weight ratio is calculated using the weight in Comparative Example 1 as a reference (100).

[Table 1]

| Experiment No. | Core | Lamination 1st layer | Lamination 2nd layer | Weight ratio | Specific rigidity | | Specific strength | |
|---|---|---|---|---|---|---|---|---|
| | | | | | TD | MD | TD | MD |
| Comparative Example 1 | T8 | PP0.8mm | - | 100 | 144 | 128 | 320 | 288 |
| Comparative Example 2 | T8 | A350 | - | 85 | 216 | 184 | 264 | 208 |
| Example 1 | T8 | A350 | PP0.2mm | 92 | 264 | 240 | 440 | 368 |
| Example 2 | T8 | A350 | PP0.4mm | 99 | 328 | 328 | 544 | 504 |

As can be seen from Table 1, the multilayer structures of Examples 1 to 2 of the present invention reduced the weight, did not cause any raised wrinkles due to buckling in the bending test, and improved both the specific rigidity and the specific strength. Moreover, Table 1 shows that the specific rigidity was higher, but the specific strength was lower in Comparative Example 2, in which the multiaxial fiber sheet was bonded to the hollow plate-like body so as to reduce the weight, than in Comparative Example 1, in which the thermoplastic resin film was bonded to the hollow plate-like body. To improve the specific strength, as shown in Examples 1 to 2, the thermoplastic resin film was added further to Comparative Example 2, and thus the specific strength was improved. Table 1 also confirms that Examples 1 to 2 improved both the specific rigidity and the specific strength despite that fact that the weight in Examples 1 to 2 was smaller than that in Comparative Example 1.

(Examples 3 to 4, Comparative Examples 3 to 4)

A core material (trade name: "TECCELL" manufactured by Gifu Plastic Industry Co., Ltd.) with a thickness of 30 mm was used as a hollow plate-like body (referred to as "T30" in the following). The weight per square meter (weight per unit area) was 2100 g/m$^2$. A multilayer structure was produced in the same manner as Examples 1 to 2 except for the use of the above hollow plate-like body.

Table 2 shows the specific rigidity and the specific strength derived from the flexural rigidity and the flexural strength of the multilayer structure thus produced. In Table 2, TD represents the width direction and MD represents the longitudinal direction. The specific rigidity is a value obtained by dividing a flexural rigidity value by specific gravity. The specific strength is a value obtained by dividing a flexural strength value by specific gravity. The weight ratio is calculated using the weight in Comparative Example 3 as a reference (100).

[Table 2]

| Experiment No. | Core | Lamination 1st layer | Lamination 2nd layer | Weight ratio | specific rigidity | | Specific strength | |
|---|---|---|---|---|---|---|---|---|
| | | | | | TD | MD | TD | MD |
| Comparative Example 3 | T30 | PP1.0mm | - | 100 | 5300 | 4600 | 6000 | 4800 |
| Comparative Example 4 | T30 | A350 | - | 74 | 6800 | 6400 | 2900 | 2600 |
| Example 3 | T30 | A350 | PP0.4mm | 95 | 9200 | 7500 | 6500 | 5200 |
| Example 4 | T30 | PP0.4mm | A350 | 95 | 8700 | 8300 | 6100 | 4900 |

As can be seen from Table 2, even if the order in which the multiaxial fiber sheet (A350) and the thermoplastic resin film (PP) were layered was changed, both Examples 3 and 4 achieved good results.

(Examples 5 to 6, Comparative Examples 5 to 6)

< Hollow plate-like body >

A core material (trade name: "TECCELL" manufactured by Gifu Plastic Industry Co., Ltd.) with a thickness of 8 mm was used (see FIG. 2E, referred to as "T8" in the following). The weight per square meter (weight per unit area) was 1100 g/m$^2$. This hollow plate-like body was produced in the following manner. A 0.3 mm thick polypropylene (PP) sheet was vacuum formed three-dimensionally and folded into a honeycomb core material. Because of concavities or holes provided in the surface of the honeycomb core material, the bonding area with the multiaxial fiber sheet is increased and the anchor effect is obtained, thereby improving the welding strength.

< Fiber sheet >

A fiber sheet included three layers of a plain woven fabric (with a weight per unit area of 105 g/m$^2$) produced by weaving polypropylene monofilament threads (with a total fineness of 1100 dtex) at a warp density of 12/inch and a weft density of 12/inch.

< Thermoplastic resin film >

A polypropylene resin undrawn sheet having a thickness of 0.8 mm and a tensile modulus of elasticity of 1600 (MPa) was used (abbreviated as "PP0.8mm"). A polypropylene resin undrawn sheet having a thickness of 0.2 mm is abbreviated as "PP0.2mm". A polypropylene resin undrawn sheet having a thickness of 0.4 mm is abbreviated as "PP0.4mm".

< Adhesive film >

A 0.03 mm thick polyethylene film was interposed as an adhesive film between each of the hollow plate-like body, the fiber sheet, and the thermoplastic resin film.

< Production of multilayer structure >

The fiber sheet and the thermoplastic resin film were disposed on both sides of the hollow plate-like body with the polyethylene film interposed between each of them, and the adhesive films were welded by a thermal lamination method so that all the layers were integrated together.

A bending test was performed on the multilayer structure thus produced by a four-point bending method according to ASTM C393. The test piece had a width of 75 mm and a length of 550 mm, and the test rate was 20 mm/min. The support span was 500 mm and the loading span was 50 mm. Table 3 shows the results. The weight ratio is calculated using the weight in Comparative Example 5 as a reference (100).

[Table 3]

| Experiment No. | Core | Lamination 1st layer | Lamination 2nd layer | Weight ratio | Raised wrinkles due to buckling |
|---|---|---|---|---|---|
| Comparative Example 5 | T8 | PP0.8mm | - | 100 | not occur |
| Comparative Example 6 | T8 | woven fabric | - | 85 | occur |
| Example 5 | T8 | woven fabric | PP0.2mm | 92 | not occur |
| Example 6 | T8 | woven fabric | PP0.4mm | 99 | not occur |

As can be seen from Table 3, the multilayer structures of Examples 5 to 6 of the present invention reduced the weight and did not cause any raised wrinkles due to buckling in the bending test.

(Examples 7 to 8, Comparative Examples 7 to 8)

A core material (trade name: "TECCELL" manufactured by Gifu Plastic Industry Co., Ltd.) with a thickness of 30 mm was used as a hollow plate-like body (referred to as "T30" in the following). The weight per square meter (weight per unit area) was 2100 g/m$^2$. A multilayer structure was produced in the same manner as Examples 5 to 6 except for the use of the above hollow plate-like body. Table 4 shows the results of the bending test on the multilayer structure thus produced. The weight ratio is calculated using the weight in Comparative Example 7 as a reference (100).

[Table 4]

| Experiment No. | Core | Lamination 1st layer | Lamination 2nd layer | Weight ratio | Raised wrinkles due to buckling |
|---|---|---|---|---|---|
| Comparative Example 7 | T30 | PP1.0mm | - | 100 | not occur |
| Comparative Example 8 | T30 | woven fabric | - | 74 | occur |
| Example 7 | T30 | woven fabric | PP0.4mm | 95 | not occur |
| Example 8 | T30 | PP0.4mm | woven fabric | 95 | not occur |

As can be seen from Table 4, the multilayer structures of Examples 7 to 8 of the present invention reduced the weight and did not cause any raised wrinkles due to buckling in the bending test. Moreover, even if the order in which the woven fabric and the thermoplastic resin film were layered was changed, both Examples 7 and 8 achieved good results.

Industrial Applicability

The multilayer structure of the present invention can be applied to a multilayer structure for consumer products such as containers, shelves, pallets, panels, bags, sleeve boxes for automated warehouse, doors, long boxes for roll retrieval, straw mat cores, wall materials for exhibition booth, T-board (backing plates for trucking), and folding table and chairs set.

Description of Reference Numerals

1 Hollow plate-like body
2, 7 Fiber sheet
3, 8 Thermoplastic resin film
4, 5 Multilayer structure
6 Raised wrinkles
9 Composite sheet
10 Multiaxial fiber sheet
11, 12, 13 Fiber layer
14 Knitting needle
15, 16 Stitch thread (knitting thread)

**Claims**

1.  A multilayer structure (4) comprising:

    a hollow plate-like body (1) made of a thermoplastic resin; and
    a fiber sheet (2; 7) and a thermoplastic resin film (3; 8) that are laminated on at least one principal surface of the hollow plate-like body;
    **characterised in that** the multilayer structure is formed by thermally laminating the layers with an adhesive film that has a lower melting point than the thermoplastic resin film being interposed therebetween.

2.  The multilayer structure according to claim 1, wherein the fiber sheet and the thermoplastic resin film are laminated on both principal surfaces of the hollow plate-like body.

3.  The multilayer structure according to claim 1 or 2, wherein the fiber sheet is at least one fiber sheet selected from the group consisting of a multiaxial fiber sheet, a woven fabric, a knitted fabric, a nonwoven fabric, braid, lace, and net.

4.  The multilayer structure according to any one of claims 1 to 3, wherein the multiaxial fiber sheet is a fiber sheet obtained by laminating a plurality of layers, in each of which thermoplastic fibers are arranged in one direction, so that a fiber direction differs from layer to layer, and integrating the plurality of layers together.

5.  The multilayer structure according to any one of claims 1 to 4, wherein the multilayer structure is configured so that the fiber sheet and the thermoplastic resin film are laminated in the indicated order on the hollow plate-like body made of a thermoplastic resin.

6.  The multilayer structure according to any one of claims 1 to 4, wherein the multilayer structure is configured so that the thermoplastic resin film and the fiber sheet are laminated in the indicated order on the hollow plate-like body made of a thermoplastic resin.

7.  The multilayer structure according to any one of claims 1 to 6, wherein the adhesive film is a polyolefin-based film.

8.  The multilayer structure according to any one of claims 1 to 7, wherein melting points of the layers of the multilayer structure are represented by the thermoplastic resin film > the adhesive film $\geq$ the fiber sheet.

9.  The multilayer structure according to any one of claims 1 to 8, wherein a melting point of the hollow plate-like body is the same as that of the thermoplastic resin film and higher than that of the fiber sheet.

10. The multilayer structure according to any one of claims 1 to 9, wherein the hollow plate-like body, the fiber sheet, and the thermoplastic resin film are made of polypropylene or polyethylene.

**Patentansprüche**

1. Mehrschichtstruktur (4), umfassend:

einen hohlen plattenartigen Körper (1), der aus einem thermoplastischen Harz hergestellt ist; und
ein Faserblatt (2; 7) und einen Film aus thermoplastischem Harz (3; 8), die auf mindestens einer Hauptfläche des hohlen plattenartigen Körpers geschichtet sind;
**dadurch gekennzeichnet, dass** die Mehrschichtstruktur durch thermisches Schichten der Schichten mit einem Klebefilm gebildet ist, der einen niedrigeren Schmelzpunkt als der dazwischen angeordnete Film aus thermoplastischem Harz hat.

2. Mehrschichtstruktur nach Anspruch 1, wobei das Faserblatt und der Film aus thermoplastischem Harz auf beide Hauptflächen des hohlen plattenartigen Körpers geschichtet sind.

3. Mehrschichtstruktur nach Anspruch 1 oder 2, wobei das Faserblatt mindestens ein Faserblatt ist, das aus der Gruppe bestehend aus einem multiaxialen Faserblatt, einem Gewebe, einem Gestrick, einem Vliesstoff, einem Geflecht, einer Spitze und einem Netz ausgewählt ist.

4. Mehrschichtstruktur nach einem der Ansprüche 1 bis 3, wobei es sich bei dem multiaxialen Faserblatt um ein Faserblatt handelt, das durch Schichten einer Mehrzahl von Schichten, in denen jeweils thermoplastische Fasern derart in einer Richtung angeordnet sind, dass sich eine Faserrichtung von Schicht zu Schicht unterscheidet, und durch miteinander Verbinden der Mehrzahl von Schichten erhalten wird.

5. Mehrschichtstruktur nach einem der Ansprüche 1 bis 4, wobei die Mehrschichtstruktur derart konfiguriert ist, dass das Faserblatt und der Film aus thermoplastischem Harz in der angegebenen Reihenfolge auf dem hohlen plattenartigen Körper, der aus einem thermoplastischen Harz hergestellt ist, geschichtet sind.

6. Mehrschichtstruktur nach einem der Ansprüche 1 bis 4, wobei die Mehrschichtstruktur derart konfiguriert ist, dass der Film aus thermoplastischem Harz und das Faserblatt in der angegebenen Reihenfolge auf dem hohlen plattenartigen Körper, der aus einem thermoplastischen Harz hergestellt ist, geschichtet sind.

7. Mehrschichtstruktur nach einem der Ansprüche 1 bis 6, wobei es sich bei dem Klebefilm um einen Film auf Polyolefinbasis handelt.

8. Mehrschichtstruktur nach einem der Ansprüche 1 bis 7, wobei Schmelzpunkte der Schichten der Mehrschichtstruktur wiedergegeben sind durch den Film aus thermoplastischem Harz > den Klebefilm ≥ das Faserblatt.

9. Mehrschichtstruktur nach einem der Ansprüche 1 bis 8, wobei ein Schmelzpunkt des hohlen plattenartigen Körpers derselbe ist wie der des Films aus thermoplastischem Harz und höher ist als der des Faserblatts.

10. Mehrschichtstruktur nach einem der Ansprüche 1 bis 9, wobei der hohle plattenartige Körper, das Faserblatt und der Film aus thermoplastischem Harz aus Polypropylen oder Polyethylen hergestellt sind.

**Revendications**

1. Structure multicouche (4) comprenant :

un corps en forme de plaque creuse (1) constitué d'une résine thermoplastique ; et
une feuille de fibres (2; 7) et un film de résine thermoplastique (3 ; 8) qui sont laminés sur au moins une surface principale du corps en forme de corps creux ;
**caractérisée en ce que** la structure multicouche est formée par laminage thermique des couches avec un film adhésif qui a un point de fusion inférieur à celui du film de résine thermoplastique qui est intercalé entre elles.

2. Structure multicouche selon la revendication 1, dans laquelle la feuille de fibres et le film de résine thermoplastique sont laminés sur les deux surfaces principales du corps en forme de plaque creuse.

3. Structure multicouche selon la revendication 1 ou 2, dans laquelle la feuille de fibres est au moins une feuille de fibres choisie dans le groupe constitué d'une feuille de fibres multiaxiale, d'un tissu tissé, d'un tissu tricoté, d'un tissu non tissé, d'une tresse, d'un cordon et d'un filet.

4. Structure multicouche selon l'une quelconque des revendications 1 à 3, dans laquelle la feuille de fibres multiaxiale est une feuille de fibres obtenue en laminant une pluralité de couches dans chacune desquelles des fibres thermoplastiques sont agencées dans une direction de sorte que la direction des fibres diffère d'une couche à l'autre et en intégrant la pluralité de couches conjointement.

5. Structure multicouche selon l'une quelconque des revendications 1 à 4, dans laquelle la structure multicouche est configurée de sorte que la feuille de fibres et le film de résine thermoplastique soient laminés dans l'ordre indiqué sur le corps en forme de plaque creuse constitué d'une résine thermoplastique.

6. Structure multicouche selon l'une quelconque des revendications 1 à 4, dans laquelle la structure multicouche est configurée de sorte que le film de résine thermoplastique et la feuille de fibres soient laminés dans l'ordre indiqué sur le corps en forme de plaque creuse constitué d'une résine thermoplastique.

7. Structure multicouche selon l'une quelconque des revendications 1 à 6, dans laquelle le film adhésif est un film à base de polyoléfine.

8. Structure multicouche selon l'une quelconque des revendications 1 à 7, dans laquelle les points de fusion des couches de la structure multicouche sont représentés par la relation suivante : film de résine thermoplastique > film adhésif $\geq$ feuille de fibres.

9. Structure multicouche selon l'une quelconque des revendications 1 à 8, dans laquelle un point de fusion du corps en forme de plaque creuse est le même que celui du film de résine thermoplastique et plus élevé que celui de la feuille de fibres.

10. Structure multicouche selon l'une quelconque des revendications 1 à 9, dans laquelle le corps en forme de plaque creuse, la feuille de fibres et le film de résine thermoplastique sont constitués de polypropylène ou de polyéthylène.

FIG. 1A

FIG. 1B

FIG. 2A

FIG. 2B

FIG. 2C

FIG. 2D

FIG. 2E

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61198630844 U
- JP H81996258189 A
- JP 2627851 B
- JP 4278678 B
- JP 4408331 B
- EP 2006464 A
- JP 2005041130 A
- JP H0712231 U
- JP 2009532231 A